Europäisches Patentamt

European Patent Office

Office européen des brevets

(19)

(11) Veröffentlichungsnummer: **0 226 190**
**B1**

(12) # EUROPÄISCHE PATENTSCHRIFT

(45) Veröffentlichungstag der Patentschrift:
**20.09.89**

(51) Int. Cl.⁴: **F16L 5/02**

(21) Anmeldenummer: **86117320.1**

(22) Anmeldetag: **12.12.86**

(54) Abschottungsvorrichtung.

(30) Priorität: **13.12.85 DE 3544129**

(43) Veröffentlichungstag der Anmeldung:
**24.06.87 Patentblatt 87/26**

(45) Bekanntmachung des Hinweises auf die Patenterteilung:
**20.09.89 Patentblatt 89/38**

(84) Benannte Vertragsstaaten:
**AT BE CH DE FR IT LI LU NL**

(56) Entgegenhaltungen:
**EP-A- 0 154 292**
**CH-A- 636 667**
**DE-A- 2 632 325**
**DE-A- 3 246 910**
**DE-A- 3 435 658**
**GB-A- 2 108 614**
**GB-A- 2 111 624**
**US-A- 4 086 736**

(73) Patentinhaber: **E. Missel GmbH & Co.,**
**Hortensienweg 2 und 21, D-7000 Stuttgart 50(DE)**

(72) Erfinder: **Schäfer, Wolfgang, Endersbacher Strasse 51,**
**D-7000 Stuttgart 50(DE)**

(74) Vertreter: **Dipl.-Phys.Dr. Manitz Dipl.-Ing., Dipl.-Wirtsch.**
**Finsterwald Dipl.-Ing. Grämkow Dipl.-Chem.Dr. Heyn**
**Dipl.-Phys. Rotermund, Morgan, B.Sc.(Phys.)**
**Robert-Koch-Strasse 1, D-8000 München 22(DE)**

EP 0 226 190 B1

## Beschreibung

Die Erfindung betrifft eine Vorrichtung zur feuerfesten und rauchdichten Abschottung von Durchtritten gedämmter Rohrleitungen durch Wände und Decken, bei der das das jeweilige Rohr umschließende Dämmaterial im Bereich des Wand- oder Deckendurchtritts von einem mechanisch festen, insbesondere metallischen Mantel umschlossen ist und die axiale Länge des Mantels zumindest im wesentlichen gleich oder etwas größer ist als die Stärke der jeweiligen Wand oder Decke, durch die sich das Rohr erstreckt.

Eine Vorrichtung dieser Art ist aus der US-A 4 086 736 bekannt. Dabei wird im Bereich der Wanddurchführung der Raum zwischen dem in diesem Falle ungedämmten Rohr und dem Mantel mit Isoliermaterial in Form von Silikonschaum oder keramischen Fasern gefüllt, und an beiden Enden der Ummantelung wird zum Abschluß dieses Durchführungsbereichs eine festklemmbare Verschlußklappe angebracht.

Nach der Grundforderung des Brandschutzes sind bauliche Anlagen so anzuordnen, zu richten und zu erhalten, daß der Entstehung und der Ausbreitung von Schadenfeuer vorgebeugt wird. Dabei gilt es, die Verbreitung von Brand- und Rauchgasen zu verhindern, wobei sich vor allem auch Rauchgase, hervorgerufen durch qualmende Werkstoffe, verhängnisvoll auswirken. Ein Feuer braucht relativ lange Zeit, um sich durch ein Gebäude zu fressen. Können sich jedoch Rauchgase ungehindert ausbreiten, so genügt beispielsweise deren Temperatur, um innerhalb kürzester Zeit auch entfernte Bereiche zu entzünden.

Brandkatastrophen verursachen außerordentlich hohe Schäden, und es ist generell eine starke Zunahme von Bränden festzustellen, die durch Planungsfehler und Mängel im vorbeugenden Brandschutz begünstigt sind. Dies ist Grund dafür, daß verstärkt vorbeugende Maßnahmen im Brandschutz gefordert werden.

Demgemäß müssen nicht nur an herkömmliche Feuerschutzabschlüsse in Form von Türen, Klappen und dergleichen, sondern auch an Leitungsdurchführungen durch Wände und Decken wesentlich erhöhte Anforderungen gestellt werden, da bei Bränden stets die Gefahr besteht, daß durch Wegbrennen oder Wegschmelzen von aus Kunststoff bestehenden Leitungen oder der Metalleitungen umgebenden Dämmung Feuer und Rauch in andere Brandabschnitte übertragen werden und sich damit eine äußerst gefährliche zusätzliche Brandausbreitungsmöglichkeit ergibt.

Aufgabe der Erfindung ist es, eine Vorrichtung der eingangs angeführten Art zu schaffen, die problemlos zu montieren ist, vielfältige Einsatzmöglichkeiten besitzt und sich durch hohe Wirksamkeit und Zuverlässigkeit im Brandfalle auszeichnet.

Gelöst wird diese Aufgabe im wesentlichen dadurch, daß zwischen Mantel und Rohr zumindest eine umfangsmäßig verteilt angeordnete Schicht aus sich bei Hitzeeinwirkung aufblähendem Abdichtmaterial vorgesehen ist und die radiale Stärke der blähfähigen Schicht nur einen Bruchteil des Dämmmaterials beträgt.

Bereits bei Einwirkung von Temperaturen über 150°C bläht sich das Abdichtmaterial auf ein Vielfaches seiner ursprünglichen Dicke auf, wobei dieses Material während des Blähvorgangs plastische Eigenschaften besitzt und sich daher in alle Richtungen ausbreiten kann, so daß hervorragende Abdichtungen erzielt werden. Beispielsweise wird als blähfähiger Wirkstoff Vermiculargraphit verwendet. Das Material ist unempfindlich gegenüber Wasser, atmosphärischen Einwirkungen, Chemikalien und Lösungsmittel, wodurch ein absolut dichter Verschluß im Brandfalle erzielt wird. Durch geeignete Dimensionierung kann auch erreicht werden, daß das sich blähende Material in Radialrichtung derart hohe Kräfte ausübt, daß die jeweilige Leitung, insbesondere eine Kunststoffleitung, zusammengedrückt und damit auch verschlossen wird.

Das Abdichtmaterial liegt nach dem durch Hitzeeinwirkung ausgelösten Aufblähen in Form einer thermisch stabilen, hitzebeständigen Schaumschicht mit einer niedrigen Wärmeleitfähigkeit vor.

Vorzugsweise wird eine blähfähige Schicht des Abdichtmaterials zwischen Mantel und Dämmaterial vorgesehen, aber nach bevorzugten Ausführungsformen wird zusätzlich eine entsprechende blähfähige Schicht zwischen Rohr und Dämmaterial angeordnet, so daß sich auf diese Weise eine besonders schnelle Wirksamkeit unter Ausnutzung der Wärmeübertragungseigenschaften des Rohres und der Außenumhüllung erreichen läßt.

Vorzugsweise wird innerhalb des Mantels noch zumindest ein flächiger, sich über die Mantellänge erstreckender Wärmeleiter angeordnet, der wiederum dazu dient, die zur Auslösung des Blähvorgangs erforderliche Wärmeenergie schnellstmöglich in den Rohr-Durchtrittsbereich zu transportieren und dort den Blähvorgang auszulösen, ohne jedoch die Dämmeigenschaften im Normalfall zu beeinflussen.

Der Mantel der Vorrichtung nach der Erfindung ist vorzugsweise in Form von zwei miteinander verbindbaren Halbschalen ausgeführt, wobei die Halbschalen im Bereich ihrer Längsränder in der Weise kuppelbar sind, daß radial wirkende Kräfte sicher aufgenommen werden können. Bevorzugt sind die Halbschalen durch Formeingriff kraftschlüssig kuppelbar, aber es ist auch möglich, entsprechende Schraubverbindungen zumindest einseitig vorzusehen.

Vorteilhafte Ausgestaltungen der Erfindung sind in den Unteransprüchen angeführt.

Die Erfindung wird nachfolgend anhand von Ausführungsbeispielen unter Bezugnahme auf die Zeichnung erläutert; in der Zeichnung zeigt:

Fig. 1 eine schematische Längsschnittdarstellung einer Vorrichtung nach der Erfindung, und

Fig. 2 eine Querschnittsansicht eines mit einer Brandschutzmanschette versehenen Rohres.

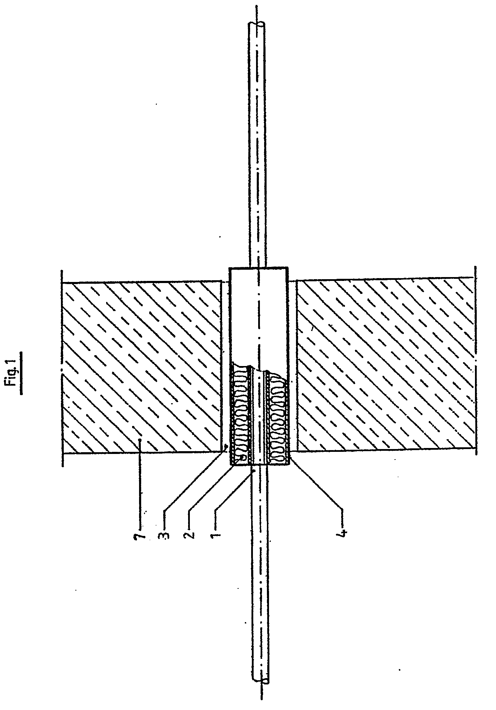

Fig. 1 zeigt ein beispielsweise aus Metall bestehendes Rohr 1, das entsprechend bestehender Vorschriften mit einer beispielsweise aus geschlossenzelligem Schaumstoff bestehenden Dämmung 2 versehen ist. Umschlossen ist die Dämmung 2 von einem Mantel 4, der mechanisch fest ausgeführt ist und beispielsweise aus Metall besteht.

Diese Anordnung ist durch eine Durchführung 3 in einer Mauer 7 geführt.

Die Brandschutzmanschette nach Fig. 1 entspricht in ihrer axialen Länge im wesentlichen der Stärke der Wand 7, und an diese Manschette schließt sich das in Fig. 1 nicht gezeigte übliche Dämmaterial an.

Tritt auf einer Seite der Mauer 7 ein Brand auf, dann dringt die Wärme - begünstigt durch die Wärmeleitung des Rohres und des Mantels 4 schnell in den Bereich der Mauerdurchführung 3 vor und bewirkt ein sofortiges Aufblähen des Abdichtmaterials.

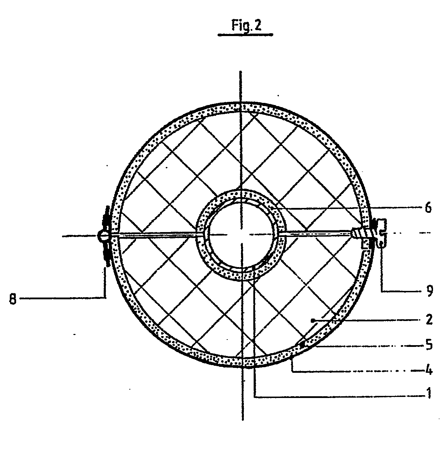

Dies ist im einzelnen in Fig. 2 zu sehen, in der eine Querschnittsansicht einer Ausführungsvariante dargestellt ist, bei der eine erste Schicht 5 aus sich bei Hitzeeinwirkung aufblähendem Abdichtmaterial zwischen dem metallischen Mantel 4 und dem Dämmaterial 2 angeordnet ist und eine zweite Schicht 6 aus sich bei Hitzeeinwirkung aufblähendem Abdichtmaterial zwischen dem Rohr 1 und dem Dämmaterial 2 vorgesehen ist.

Die Mantelumhüllung 4 ist in Form von Halbschalen ausgebildet, die einerseits über ein Gelenk 8 miteinander verbunden sind und andererseits in einem Überlappungsbereich mittels radial verlaufender Schrauben 9 gegenseitig fixiert sind.

Anstelle dieser in dem Beispiel nach Fig. 2 dargestellten Kopplung der beiden Halbschalen werden bevorzugt Flanschverbindungen und Schnapp-Rast-Verbindungen zwischen den Halbschalen verwendet, die eine kraftschlüssige Verbindung gewährleisten und sicherstellen, so daß radial auf die Ummantelung 4 einwirkende Kräfte gut aufgenommen werden können.

Im Brandfalle blähen sich beide Materialschichten 5, 6 sehr schnell auf und verschließen zumindest den Durchtrittsbereich zwischen Rohr 1 und Mantel 4, aber gemäß spezieller Ausführungsformen wird die Anordnung so gewählt, daß der Blähdruck ausreicht, um im Falle des Vorhandenseins von Kunststoffrohren auch noch das Rohr 1 selbst zu quetschen und zu verschließen. Der notwendige Abstütz-Gegendruck wird dabei von der Mantelumhüllung aufgenommen.

## Patentansprüche

1. Vorrichtung zur feuerfesten und rauchdichten Abschottung von Durchtritten gedämmter Rohrleitungen durch Wände und Decken, bei der das das jeweilige Rohr (1) umschließende Dämmaterial (2) im Bereich des Wand- oder Deckendurchtritts (3) von einem mechanisch festen, insbesondere metallischen Mantel (4) umschlossen ist und die axiale Länge des Mantels (4) zumindest im wesentlichen gleich oder etwas größer ist als die Stärke der jeweiligen Wand (7) oder Decke, durch die sich das Rohr (1) erstreckt, dadurch gekennzeichnet, daß zwischen Mantel (4) und Rohr (1) zumindest eine umfangsmäßig verteilt angeordnete Schicht (5, 6) aus sich bei Hitzeeinwirkung aufblähendem Abdichtmaterial vorgesehen ist und die radiale Stärke der blähfähigen Schicht (5, 6) nur einen Bruchteil des Dämmaterials (2) beträgt.

2. Vorrichtung nach Anspruch 1, dadurch gekennzeichnet, daß die blähfähige Schicht (5) zwischen Mantel (4) und Dämmaterial (2) vorgesehen ist.

3. Vorrichtung nach Anspruch 1, dadurch gekennzeichnet, daß die blähfähige Schicht (6) zwischen Rohr (1) und Dämmaterial (2) angeordnet ist.

4. Vorrichtung nach einem der vorhergehenden Ansprüche, dadurch gekennzeichnet, daß die radiale Stärke der blähfähigen Schicht (5, 6) weniger als ein Zehntel der radialen Stärke des Dämmaterials (2) beträgt.

5. Vorrichtung nach einem der vorhergehenden Ansprüche, dadurch gekennzeichnet, daß innerhalb des Mantels (4) zumindest ein flächiger, sich über die Mantellänge erstreckender Wärmeleiter angeordnet ist.

6. Vorrichtung nach einem oder mehreren der vorhergehenden Ansprüche, dadurch gekennzeichnet, daß das Dämmaterial (2) aus Schaumstoff, insbesondere aus geschlossenzelligem Polyethylenschaum besteht.

7. Vorrichtung nach einem der vorhergehenden Ansprüche, dadurch gekennzeichnet, daß der Mantel (4) aus miteinander verbindbaren Halbschalen besteht.

8. Vorrichtung nach Anspruch 7, dadurch gekennzeichnet, daß die Halbschalen kraftschlüssig durch Formeingriff kuppelbar sind.

9. Vorrichtung nach Anspruch 8, dadurch gekennzeichnet, daß die Halbschalen durch Schnapp-Rast-Verbindungen kuppelbar sind.

10. Vorrichtung nach Anspruch 9, dadurch gekennzeichnet, daß die Halbschalen insbesondere über radiale Flansche miteinander verschraubbar sind.

11. Vorrichtung nach Anspruch 10, dadurch gekennzeichnet, daß die Halbschalen über ein Scharnier gegenseitig angelenkt und auf der dem Scharnier gegenüberliegenden Seite überlappend kuppelbar, insbesondere durch Klemmverschluß oder Verschraubung verbunden sind.

## Revendications

1. Dispositif d'étanchéité, ignifuge et étanche à la fumée, pour le passage de canalisations tubulaires munies d'une isolation, à travers des murs et des plafonds, dans lequel le matériau isolant (2) enveloppant le tuyau (1) concerné est entouré, dans la zone de la traversée (3) du mur ou du plafond, par une enveloppe (4) mécaniquement résistante, en particulier métallique, et dans lequel la longueur, dans le sens axial, de l'enveloppe (4) est sensiblement égale, ou un peu supérieure à l'épaisseur du mur (7) ou du plafond traversé par le tuyau (1), caractérisé en ce qu'entre l'enveloppe (4) et le tuyau (1), est prévue au moins une couche (5, 6) répartie périphériquement, faite d'un matériau d'étanchéité gonflant sous l'effet de la chaleur, et en ce que l'épaisseur dans le sens radial de la couche (5, 6) susceptible de gonfler représente seulement une fraction de celle du matériau d'isolation (2).

2. Dispositif suivant la revendication 1, caractérisé en ce que la couche (5) susceptible de gonfler est prévue entre l'enveloppe (4) et le matériau d'isolation (2).

3. Dispositif suivant la revendication 1, caractérisé en ce que la couche (6) susceptible de gonfler est disposée entre le tuyau (1) et le matériau d'isolation (2).

4. Dispositif suivant l'une quelconque des revendications précédentes, caractérisé en ce que l'épaisseur dans le sens radial de la couche (5, 6) susceptible de gonfler représente moins d'un dixième de l'épaisseur radiale du matériau d'isolation (2).

5. Dispositif suivant l'une quelconque des revendications précédentes, caractérisé en ce qu'à l'intérieur de l'enveloppe (4), est disposé au moins un conducteur de chaleur plat, s'étendant sur la longueur de l'enveloppe.

6. Dispositif suivant l'une ou plusieurs des revendications précédentes, caractérisé en ce que le matériau d'isolation (2) est constitué par une mousse, en particulier par une mousse de polyéthylène à cellules fermées.

7. Dispositif suivant l'une quelconque des revendications précédentes, caractérisé en ce que l'enveloppe (4) est constituée de demi-coquilles pouvant être rattachées entre elles.

8. Dispositif suivant la revendication 7, caractérisé en ce que les demi-coquilles peuvent être accouplées à force par interengagement de profils.

9. Dispositif suivant la revendication 8, caractérisé en ce que les demi-coquilles peuvent être accouplées par des liaisons à enclenchement rapide.

10. Dispositif suivant la revendication 9, caractérisé en ce que les demi-coquilles peuvent être assemblées entre elles par vis, en particulier au moyen de brides radiales.

11. Dispositif suivant la revendication 10, caractérisé en ce que les demi-coquilles sont articulées l'une à l'autre par l'intermédiaire d'une charnière et peuvent être accouplées à recouvrement du côté opposé à la charnière, en particulier au moyen d'une fermeture à serrage ou par vissage.

## Claims

1. Apparatus for the fireproof and smoke-tight sealing of the openings for insulated conduits through walls, ceilings and floors wherein the insulating material (2) surrounding the respective conduit (1) is surrounded in the region of the opening (3) through the wall or ceiling by a mechanically firm jacket (4), in particular a metallic jacket, with the axial length of the jacket (4) being at least substantially the same as or somewhat larger than the thickness of the respective wall (7), ceiling or floor through which the conduit (1) extends, characterized in that at least one layer (5, 6) of a sealing material which swells on the action of heat is provided between the jacket (4) and the conduit (1) and is distributed around the periphery, with the radial thickness of the swellable layer (5, 6) amounting to only a fraction of the insulating material (2).

2. Apparatus in accordance with claim 1, characterized in that the swellable layer (5) is provided between the jacket (4) and the insulating material (2).

3. Apparatus in accordance with claim 1, characterized in that the swellable layer (6) is arranged between the conduit (1) and the insulating material (2).

4. Apparatus in accordance with one of the preceding claims, characterized in that the radial thickness of the swellable layer (5, 6) amounts to less than one tenth of the radial thickness of the insulating material (2).

5. Apparatus in accordance with one of the preceding claims, characterized in that at least one areal heat conductor extending over the length of the jacket is arranged inside the jacket (4).

6. Apparatus in accordance with one or more of the preceding claims, characterized in that the insulating material (2) consists of foam material, in particular of closed cell polyethylene foam.

7. Apparatus in accordance with one of the preceding claims, characterized in that the jacket (4) consists of half shells which are connectable with each other.

8. Apparatus in accordance with claim 7, characterized in that the half shells can be coupled together in force transmitting manner through interengaging shapes.

9. Apparatus in accordance with claim 8, characterized in that the half shells can be coupled together through snap locking connections.

10. Apparatus in accordance with claim 9, characterized in that the half shells can be screwed together, in particular via radial flanges.

11. Apparatus in accordance with claim 10, characterized in that the half shells are mutually hinged together via a hinge and can be coupled together in overlapping manner at the slide opposite to the hinge, in particular by a clamped closure or by a screw means.

Fig. 1

Fig. 2